# EUROPÄISCHE PATENTSCHRIFT

(11) **EP 0 358 896 B1**
(45) Veröffentlichungstag und Bekanntmachung des Hinweises auf die Patenterteilung: **02.06.1993**
(21) Anmeldenummer: 89113534.5
(22) Anmeldetag: 22.07.1989
(51) Int. Cl.: F01M 11/00, F16L 41/10, F16B 37/12, F16B 37/04

(54) **Ölwanne aus Kunststoff**
Plastic sump
Carter d'huile matière plastique

(30) Priorität: 15.09.1988 DE 3831308
(43) Veröffentlichungstag der Anmeldung: 21.03.1990
(73) Patentinhaber: Dr.Ing.h.c. F. Porsche Aktiengesellschaft, 70435 Stuttgart (DE)
(72) Erfinder: Kamprath, Axel, Dr. Dipl.-Ing., D-7833 Endingen (DE); Wehr, Thomas, Dipl.-Ing., D-7257 Ditzingen 1 (DE)

(56) Entgegenhaltungen:
- DE-A- 2 217 438
- DE-A- 3 606 052
- DE-C- 3 246 768
- FR-A- 2 523 663
- US-A- 2 235 078
- US-A- 4 729 705

## Beschreibung

Die Erfindung betrifft einen Kunststoffbehälter nach dem Oberbegriff des Patentanspruchs 1.

Es ist bekannt, **DE-PS 32 46 768,** einen zylindrischen Gewindeeinsatz mit Umfangsnuten zu versehen, in die eine den Gewindeeinsatz umgebende Kunststoffwand mit korrespondierenden Abschnitten hineinragt. Zur Dichtung zwischen Wand und Gewindeeinsatz dient ein den Gewindeeinsatz radial umschließender Ring aus Elastomer, der in einer Nut des Gewindeeinsatzes angeordnet ist. Dieser Ausführung haftet der Nachteil an, daß die Nuten am Gewindeeinsatz einen zusätzlichen Fertigungsaufwand darstellen. Außerdem erfordert die dichtungsgerechte Aufnahme des Rings die Einhaltung enger Toleranzen, was erfahrungsgemäß mit relativ hohen Kosten verbunden ist.

Außerdem sind Gehäuse- und Abdeckteile aus Kunststoff-Formmassen bekannt, DE-36 06 052 A1, die mit vom Werkstoff umgebenen Einschlußteilen versehen sind.

Aufgabe der Erfindung ist es daher, den Gewindeeinsatz und seine Halterung so zu gestalten, daß er bei baulicher und toleranztechnischer Vereinfachung fest und dicht - auch bei hoher Beanspruchung über einen relativ langen Zeitraum - mit dem Kunststoffbehälter verbunden ist.

Erfindungsgemäß wird diese Aufgabe durch die kennzeichnenden Merkmale des Patentanspruchs 1 gelöst. Weitere, die Erfindung ausgestaltende Merkmale, sind in den nachfolgenden Ansprüchen enthalten.

Die mit der Erfindung hauptsächlich erzielten Vorteile sind darin zu sehen daß der metallische Gewindeeinsatz, bestehend au zylindrischem Abschnitt mit an einem Ende vorgesehenem Kragen, ein einfaches Bauteil ist. Die Verbindung des Gewindeeinsatzes mit dem Kunststoffbehälter erfolgt am Kragen und zwar mit einer Klebeeinrichtung, die zwei Funktionen ausübt: Halterung und Dichtung. Die Klebeeinrichtung ist ein Klebefilm, der handelsüblich sein kann und sich für den vorgesehenen Anwandungsfall beispielsweise durch Stanzen leicht vorbereiten läßt. Schließlich läßt sich der Gewindeeinsatz durch kostengünstige Verfahrensschritte mit dem Kunststoffbehälter verbinden.

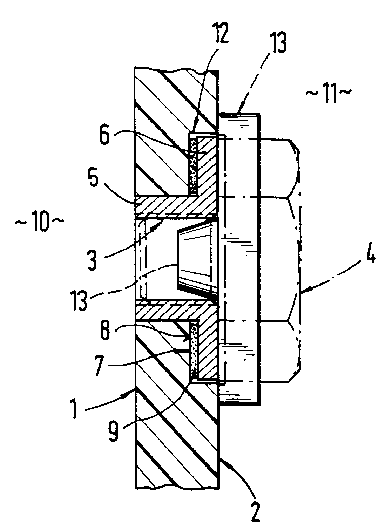

In der Zeichnung, die einen Schnitt in größerem Maßstab durch einen Kunststoffbehälter im Bereich einer Ölablaßschraube wiedergibt, ist ein Ausführungsbeispiel dargestellt, das nachstehend näher beschrieben ist.

Der Kunststoffbehälter 1 ist eine Ölwanne, die auf übliche Weise an der Unterseite eines nicht gezeigten Brennkraftmaschinen-Kurbelgehäuses befestigt ist, umfaßt eine Wand 2, die mit einem Gewindeeinsatz 3 für eine Ölablaßschraube 4 versehen ist. Der Gewindeeinsatz 3 besteht aus Metall, beispielsweise Messing, und wird gebildet durch einen zylindrischen Abschnitt 5 und einen Kragen 6; letzterer weist Kreisform auf. Der Kragen 6 liegt unter Zwischenschaltung einer Klebeeinrichtung 7 an einem äußeren Wandabschnitt 8 der Wand 2 auf.

Die Klebeeinrichtung 7 ist ein aus Polyester- oder Epoxid-Harz bestehender Klebefilm 9, der von einem handelsüblichen Vorprodukt (Rolle, Folie oder dergleichen) durch Stanzen vorbereitet ist. Der Klebefilm 9 dient einerseits als Haltevorrichtung für den Gewindeeinsatz 3 und andererseits als Dichtung. Sie ist gas- und flüssigkeitsdicht, so daß entsprechende Medien aus dem Innenraum in der Ölwanne 1 nicht an die Außenseite 11 treten. Von der Außenseite 11 her ist der Gewindeeinsatz 3 an die Wand 2 des Kunststoffbehälters 1 herangeführt.

Im Bereich des Kragens 6 und des Klebefilms 9 ist der äußere Wandabschnitt 8 mit einer Ausnehmung 12 versehen. Sie stellt sicher, daß der Kragen 6 oberflächenbündig in den Kunststoffbehälter 1 integriert ist

Das Verfahren zum Verbinden des Gewindeeinsatzes 3 mit dem Kunstoffbehälter 1 läuft in folgenden Schritten ab:
- der Klebefilm 9 wird durch Ausstanzen gebildet;
- der Klebefilm 9, der als Ausgangsprodukt leicht klebend ist, wird am Kragen 6 des Gewindeeinsatzes 3 zur Anlage gbracht;
- der Gewindeeinsatz 3 wird mittels eines erwärmten Werkzeuges 13 in die Kunststoffmatrix eingepreßt.

Beim Einpreßen in die heiße Kunststoffmatrix erweicht der Klebefilm 9 zunächst und härtet dann mit der Kunststoffmatrix aus. Der Klebefilm 9 erhält durch die Erweichung eine hohe Klebefähigkeit und haftet sowohl am metallischen Gewindeeinsatz 3 als auch ausgehärteten Kunststoff (Wand 2).

## Patentansprüche

1. Kunststoffbehälter für eine Brennkraftmaschine, die mit einem gas- und flüssigkeitsdicht ausgebildeten Gewindeeinsatz (3) versehen ist, wobei ein zylindrischer Abschnitt des Gewindeeinsatzes (3) in einer Wand (2) des Behälters (1) ruht, **dadurch gekennzeichnet,** daß der Behälter (1) die Ölwanne der Brennkraftmaschine ist und der Gewindeeinsatz (3) zur Aufnahme einer Ölablaßschraube (4) dient und daß der Gewindeeinsatz (3) an einem der Außenseite (11) der Wand (2) benachbarten Endbereich des Abschnittes (5) einen Kragen (6) aufweist, der unter Vermittlung einer dichtenden Klebeeinrichtung (7) an einem äußeren Wandabschnitt (8) des Behälters (1) gehalten ist.

2. Kunststoffbehälter nach Anspruch 1, **dadurch gekennzeichnet,** daß die Klebeeinrichtung (7) ein ausgestanzter Klebefilm (9) ist, der den Gewindeeinsatz (3) in seiner axialen Richtung (8a) kraftschlüssig an der Ölwanne (1) in Lage hält.

3. Kunststoffbehälter nach den Ansprüchen 1 und 2, **dadurch gekennzeichnet,** daß der äußere Wandabschnitt (8) zur Aufnahme des Kragens (6) eine Ausnehmung (12) aufweist, dergestalt, daß der Kragen oberflächenbündig in die Ölwanne (1) integriert ist.

4. Kunststoffbehälter nach Anspruch 2, **dadurch gekennzeichnet,** daß der Klebefilm (9) beispielsweise aus Polyester oder Epoxydharz besteht und durch Wärmebehandlung in seinen Endzustand versetzt ist.

5. Verfahren zur Befestigung eines Gewindeeinsatzes in einem Kunststoffbehälter nach Anspruch 1, **gekennzeichnet durch** folgende Schritte:
- der Klebefilm (9) wird durch Ausstanzen gebildet;
- der Klebefilm (9) ist mit dem Kragen (6) des Gewindeeinsatzes (3) verbunden;
- der Gewindeeinsatz (3) mit Klebefilm (9) wird mittels eines erwärmten Werkzeuges (13) in den äußeren Wandabschnitt (8) des Behälters (1) eingepreßt.

## Claims

1. A plastics tank for an internal-combustion engine provided with a threaded insert (3) made gas- and liquid-tight, a cylindrical portion of the threaded insert (3) resting in a wall (2) of the tank (1), **characterized in that** the tank (1) is the oil sump of the internal-combustion engine, and the threaded insert (3) is used for receiving an oil-drainage screw (4), and on an end area of the portion (5) adjacent to the outside (11) of the wall (2) the threaded insert (3) has a collar (6) held on an outer wall portion (8) of the tank (1) with the interposition of a sealing adhesion device (7).

2. A plastics tank according to Claim 1, **characterized in that** the adhesion device (7) is a punched adhesive film (9) holding the threaded insert (3) in position on the oil sump (1) by frictional securing in its axial direction (8a).

3. A plastics tank according to Claims 1 and 2, **characterized in that** the outer wall portion (8) has a recess (12) for receiving the collar (6) in such a way that the collar is incorporated in the oil sump (1) with their surfaces flush.

4. A plastics tank according to Claim 2, **characterized in that** the adhesive film (9) consists for example of polyester or epoxy resin and achieves its final state by heat treatment.

5. A method of securing a threaded insert in a plastics tank according to Claim 1, **characterized by** the following steps:
- the adhesive film (9) is formed by punching;
- the adhesive film (9) is joined to the collar (6) of the threaded insert (3)
- the threaded insert (3) with the adhesive film (9) is pressed into the outer wall portion (8) of the tank (1) by means of a heated tool (13).

## Revendications

1. Réservoir en matière plastique pour un moteur à combustion interne, qui est pourvu d'un insert taraudé (3) étanche aux gaz et aux liquides, une partie cylindrique de l'insert taraudé (3) reposant dans une paroi (2) du réservoir (1), caractérisé en ce que le réservoir (1) est le carter d'huile du moteur à combustion interne et l'insert taraudé (3) sert à loger une vis de vidange d'huile (4) et en ce que l'insert taraudé (3) présente, sur une zone terminale, voisine du côté extérieur (11) de la paroi (2), de la partie (5), un collet (6) qui est maintenu sur une partie de paroi (8) extérieure du réservoir (1), par l'intermédiaire d'un dispositif adhésif (7), assurant l'étanchéité.

2. Réservoir en matière plastique selon la revendication 1, caractérisé en ce que le dispositif adhésif (7) est une pellicule adhésive (9) découpée qui maintient en position, par force, l'insert taraudé (3), dans sa direction axiale (8a), sur le carter d'huile (1).

3. Réservoir en matière plastique selon les revendications 1 et 2, caractérisé en ce que la partie de paroi (8) extérieure présente, pour loger le collet (6), un évidement (12) tel que le collet est intégré dans le carter d'huile (1), de manière que leurs surfaces soient alignées.

4. Réservoir en matière plastique selon la revendication 2, caractérisé en ce que la pellicule adhésive (9) est par exemple en polyester ou en résine époxy et est amenée dans son état définitif, par traitement thermique.

5. Procédé de fixation d'un insert taraudé dans un réservoir en matière plastique selon la revendication 1, caractérisé par les étapes suivantes :
- la pellicule adhésive (9) est formée par découpe ;
- la pellicule adhésive (9) est assemblée avec le collet (6) de l'insert taraudé (3) ;
- l'insert taraudé (3) avec la pellicule adhésive (9) est pressé, au moyen d'un outil (13) chauffé, dans la partie de paroi (8) extérieure du réservoir (1).
